# EUROPEAN PATENT SPECIFICATION

(11) **EP 2 330 506 B1**
(45) Date of publication and mention of the grant of the patent: **20.12.2017**
(21) Application number: 09807858.7
(22) Date of filing: 13.08.2009
(51) Int. Cl.: G06F 9/48, G06F 9/50

(54) **METHOD AND DEVICE FOR BALANCING INTERRUPT LOAD OF MULTICORE PROCESSOR**
VERFAHREN UND VORRICHTUNG FÜR DEN INTERRUPTLASTAUSGLEICH BEI MULTICORE-PROZESSOREN
PROCÉDÉ ET DISPOSITIF D'ÉQUILIBRAGE DE CHARGE D'INTERRUPTION DE PROCESSEUR MULTI-COEUR

(30) Priority: 19.08.2008 CN 200810135521
(43) Date of publication of application: 08.06.2011
(73) Proprietor: ZTE Corporation, Shenzhen, Guangdong 518057 (CN)
(72) Inventor: ZHAO, Yang, Shenzhen Guangdong 518057 (CN); XIAO, Li, Shenzhen Guangdong 518057 (CN)
(74) Representative: Deambrogi, Edgardo
(86) International application number: PCT/CN2009/073243
(87) International publication number: WO 2010/020159

(56) References cited:
- CN-A- 101 354 664
- US-A1- 2003 120 702
- US-A1- 2005 033 832
- US-A1- 2005 125 582
- US-A1- 2008 126 652
- Anonymous: "IRQBALANCE - handholding your interrupts for power and performance", Internet citation, 4 July 2008 (2008-07-04), XP002682353, Retrieved from the Internet: URL:http://web.archive.org/web/20080704075 930/http://www.irqbalance.org/documentatio n.php [retrieved on 2012-08-23]
- LUIGI RIZZO: "Device Polling support for FreeBSD", INTERNET CITATION, [Online] XP002454334, Retrieved from the Internet: URL:http://info.iet.unipi.it/ luigi/polling/> [retrieved on 2007-10-10]

## Description

### Field of the Invention

The present invention relates to communication field, and specifically, to a method and a device for balancing an interrupt load of a multicore processor, of the kinds defined in the preambles of claims 1 and 4, respectively.

An interrupt load balancing method of that kind is disclosed in the document Anonymous: "IRQBALANCE-handholding your interrupts for power and performance", Internet citation, 4 July 2008 (2008-07-04), XP002682353 retrieved from the Internet: URL: http://web.archive.org/web/20080704075930/http://www.irqbalance.org/documentation.ph p. According to this document interrupts are assigned to cores, the assignment dynamically switching between a power save mode and a performance mode based on system load statistics.

### Background of the Invention

Interrupt is one of the factors affecting reliability of a system. When an interrupt occurs, a processor will handle the interrupt event. The cases in which a single-core processor and a multicore processor handle an interrupt are described in detail.

In a single-core processor, when an interrupt occurs, the interrupt event is reported to the current processor. The processor stores the current context environment, and turns to execute an interrupt service program, and after the processing is finished, the processor restores the previous context and continues the operation. When there are many devices linked externally to the processor, numerous interrupts may suddenly occur at a certain moment. As interrupt nesting may result in that the processor is in the interrupt environment for a long time, some key real-time tasks cannot run; or considering real-time performance, the handling of some interrupt events is delayed to a task level for running. However, due to the uncertainty of task running, in practical running, it is possible that some interrupts cannot be handled in time, which will result in the loss of interrupt, and thereby the overall performance of the system will be reduced.

In a multicore processor, all the interrupts are collectively processed on one core. Thus, the multicore processor will encounter the same problem as the single-core processor, viz. if high priority interrupts on a core is handled too frequently, the low priority interrupts will be made lost, or due to excessive handling of interrupts on a core, some key real-time tasks can not run, and as a result, the advantages of a multicore processing system cannot be rendered.

In order to render the advantages of a multicore processing system, when a multicore processor processes messages, if the message flow is very large, load balancing between multiple cores can be taken into consideration, and message interrupts can be sequentially and uniformly scheduled and handled on the multiple core processors. However, if the above means is adopted, a message received posteriorly may be processed first and transmitted, which will lead to disorder in message processing.

Thus, for interrupt processing of a multicore processor, if load balance of the system is not considered or if load balance of the system is not considered in accordance with practical application, interrupt processing cannot be realized properly.

### Summary of the Invention

The present invention is proposed in view of the problem, i.e., for interrupt processing of a multicore processor, if load balance of the system is not considered or if load balance of the system is not considered in accordance with practical application, interrupt processing cannot be realized properly. Thus, the present invention aims at providing a method and a device for balancing an interrupt load of a multicore processor, so as to solve the above problem.

According to one aspect of the present invention, a method as defined in claim 1 for balancing an interrupt load of a multicore processor is provided.

In the method for balancing an interrupt load of a multicore processor according to the present invention, the multicore processor comprises multiple cores and an interrupt controller for controlling interrupt handling of the cores. The method comprises: pre-configuring a default processing core and a scheduling core group corresponding to an interrupt device, wherein the default processing core is one core in the scheduling core group; configuring the interrupt controller to route the interrupt device to the corresponding default processing core; and controlling the interrupt controller to route interrupts of the interrupt device to one or multiple cores in the scheduling core group to which the default processing core belongs, when the number of interrupts of the interrupt device exceeds an interrupt threshold or a processing amount of the default processing core exceeds an interrupt load.

Preferably, controlling the interrupt controller to route the interrupt device to one or multiple cores in the scheduling core group to which the default processing core belongs specifically comprises: controlling the interrupt controller to route, in the manner of round robin, the interrupts of the interrupt device to other cores in the scheduling core group, in the case that the number of interrupts of the interrupt device exceeds the interrupt threshold and the processing amount of the default processing core exceeds the interrupt load; and controlling the interrupt controller to route, in the manner of round robin, the interrupts of the interrupt device to part of or all of the cores in the scheduling core group including the default processing core in the case that the number of interrupts of the interrupt device exceeds the interrupt threshold, but the processing amount of the default processing core does not exceed the interrupt load.

Preferably, in the case that the processing amount of the default processing core exceeds the interrupt load, the interrupt controller is controlled to route the interrupts of the interrupt device to other cores in the scheduling core group.

Preferably, after controlling the interrupt controller to route the interrupts of the interrupt device to one or multiple cores in the scheduling core group to which the default processing core belongs, the method further comprises: judging whether the number of interrupts assigned by the interrupt device to each core to which the interrupts of the interrupt device are routed exceeds the interrupt threshold; or for each core to which the interrupts of the interrupt device are routed, judging whether a processing amount thereof exceeds an interrupt load thereof; and if the judgment result is yes, processing in a polling manner interrupts of the interrupt device.

Preferably, when the scheduling core group comprises one core, after controlling the interrupt controller to route the interrupts of the interrupt device to one or multiple cores in the scheduling core group to which the default processing core belongs specifically comprises: processing interrupts of the interrupt device in a polling manner.

Preferably, pre-configuring a default processing core and a scheduling core group corresponding to an interrupt device specifically comprises: setting the corresponding relation among type of the interrupt device, the scheduling core group, and the default processing core in a static interrupt strategy table, and storing the static interrupt strategy table in a nonvolatile memory, wherein the static interrupt strategy table is further set with the interrupt threshold and an interrupt mode, the interrupt mode including interrupt and polling.

Preferably, in the case that preset time is up, the interrupt controller is controlled to route the interrupts of the interrupt device back to the default processing core for processing.

Preferably, as to relevant interrupts in the interrupt device, the interrupt controller is controlled to route the relevant interrupts to one core in the scheduling core group for processing.

According to another aspect of the present invention, a device as defined in claim 6 for balancing an interrupt load of a multicore processor is provided.

In the device for balancing an interrupt load of a multicore processor according to the present invention, the multicore processor comprises multiple cores and an interrupt controller for controlling interrupt handling of the cores. The device comprises: a configuration module, configured to pre-configure a default processing core and a scheduling core group corresponding to an interrupt device, wherein the default processing core is one core in the scheduling core group; a first regulating and controlling module, configured to control the interrupt controller to route the interrupts of the interrupt device to the corresponding default processing core; and a second regulating and controlling module, configured to control the interrupt controller to route the interrupts of the interrupt device to one or multiple cores in the scheduling core group to which the default processing core belongs.

Preferably, the second regulating and controlling module specifically comprises: a first regulating and controlling sub module, configured to control the interrupt controller to route, in the manner of round robin, the interrupts of the interrupt device to other cores in the scheduling core group; and a second regulating and controlling sub module, configured to control the interrupt controller to route, in the manner of round robin, the interrupts of the interrupt device to the part in the scheduling core group including the default processing core or all of the cores.

Preferably, the device further comprises: a first judging module, configured to judge whether the number of interrupts assigned by the interrupt device to each core to which the interrupts of the interrupt device are routed exceeds the interrupt threshold; a second judging module, configured to, for each core to which the interrupts of the interrupt device are routed, judge whether a processing amount thereof exceeds an interrupt load thereof; and a processing module connected to the first judging module and the second judging module, configured to process in a polling manner interrupts of the interrupt device according to the judgment results of the first judging module and/or the second judging module.

Through the present invention, different scheduling strategies are used on the multiple cores of a multicore processor, which solves the problem, i.e., for interrupt processing of a multicore processor, if load balance of the system is not considered or if load balance of the system is not considered in accordance with practical application, interrupt processing cannot be realized properly, and enables balancing processing of interrupts.
cannot be realized properly, and enables balancing processing of interrupts.

### Brief Description of the Accompanying Drawings

The drawings herein are used to provide further understanding of the present invention and form a part of the specification. The exemplary embodiments of the present invention and the description thereof are used to explain the present invention without unduly limiting the present invention, in which:
Figure 1 is a schematic diagram of an interrupt scheduling model of a multicore processor for implementing an embodiment of the present invention;
Figure 2 is a structural block diagram of the device for balancing an interrupt load of a multicore processor according to an embodiment of the present invention;
Figure 3 is a preferred structural block diagram of the device for balancing an interrupt load of a multicore processor according to an embodiment of the present invention;
Figure 4 is a flow chart of the method for balancing an interrupt load of a multicore processor according to an embodiment of the present invention;
Figure 5 is a schematic diagram of network port interrupt load balancing according to an embodiment of the present invention; and
Figure 6 is a flow chart of software processing of the method for balancing an interrupt load of a multicore processor according to an embodiment of the present invention.

### Detailed Description of the Preferred Embodiments

### Brief Description on Functions

The embodiments of the present invention propose performing interrupt processing in the multiple cores of a multicore processor according to different interrupt configuration strategies, viz. using different interrupt balancing strategies according to practical application. The interrupt load of the multicore processor is balanced on the multiple cores using inter processor interrupt. After the initial allocation of the interrupt processing which the multiple cores need to perform, dynamic adjustment is performed on the initial allocation according to practical application, so as to avoid that low priority interrupts are lost due to the excessively frequent handling of high priority interrupts on one core, or that some key real-time tasks cannot run due to excessive handling of interrupts in a core. The real-time performance, stability, and reliability of the system are enhanced; meanwhile, some extra burden brought forth by a single interrupt scheduling algorithm to the applications can be avoided, thereby the overall performance of the system is enhanced.

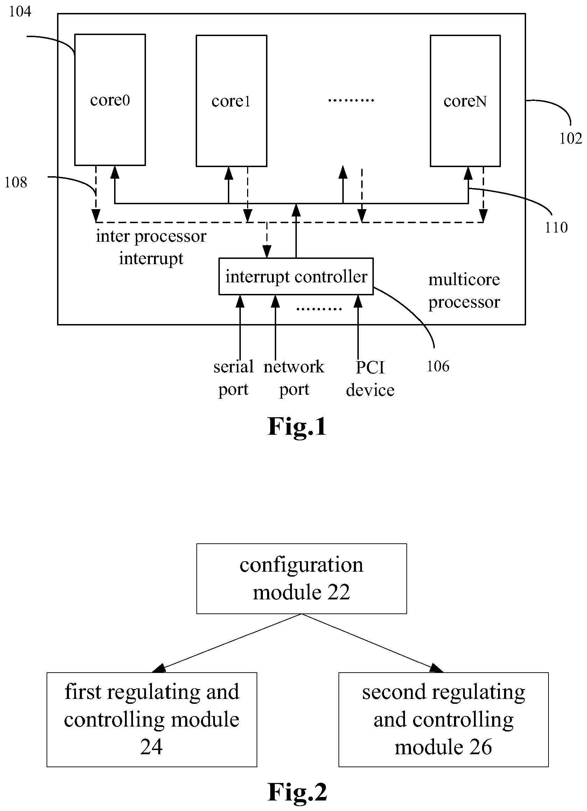

Figure 1 is a schematic diagram of an interrupt scheduling model of a multicore processor for implementing an embodiment of the present invention. As shown in Figure 1, 102 represents a model of a multicore processor for implementing the present invention, 104 represents the cores of the multicore processor (wherein the cores include: core 0, core 1 ... core N), 106 represents an interrupt controller (Programmable Interrupt Controller, referred to as PIC) of the multicore processor, 108 and 110 represent routs for processor interrupt message channels between the multiple cores. In addition, Figure 1 also shows Inter Processor Interrupt (referred to as IPI), a serial port, a network port, and a Peripheral Component Interconnect (referred to as PCI) device. The present invention is now described in detail in conjunction with the drawings and the embodiments.

### Device Embodiment

According to an embodiment of the present invention, a device for balancing an interrupt load of a multicore processor is provided, wherein the multicore processor comprises multiple cores and an interrupt controller for controlling interrupt handling of the cores. Figure 2 is a structural block diagram of the device for balancing an interrupt load of a multicore processor according to an embodiment of the present invention. As shown in Figure 2, the device comprises: a configuration module 22, a first regulating and controlling module 24, and a second regulating and controlling module 26. The structure is described in detail as follows.

The configuration module 22 is configured to pre-configure a default processing core and a scheduling core group corresponding to an interrupt device, wherein the default processing core is one core in the scheduling core group.

The first regulating and controlling module 24 is connected to the configuration module 22, and is configured to control the interrupt controller to route the interrupt device to the corresponding default processing core.

The second regulating and controlling module 26 is connected to the configuration module 22, and is configured to control the interrupt controller to route the interrupt device to one or multiple cores in the scheduling core group to which the default processing core belongs.

Through the present embodiment, different scheduling strategies are used on the multiple cores of the multicore processor, which solves the problem, i.e., for interrupt processing of a multicore processor, if load balance of the system is not considered or if load balance of the system is not considered in accordance with practical application, interrupt processing can not be realized properly, and enables balancing processing of interrupts.

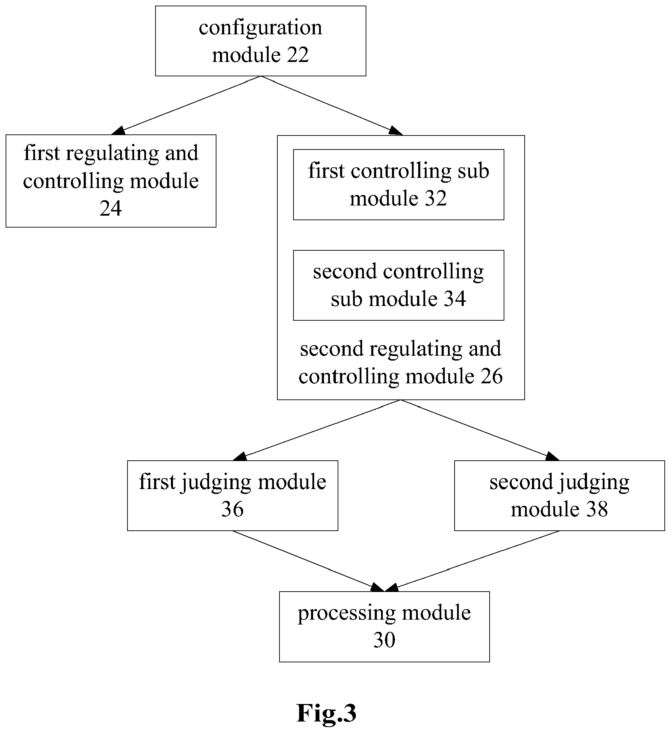

Figure 3 is a preferred structural block diagram of the device for balancing an interrupt load of a multicore processor according to an embodiment of the present invention. As shown in Figure 3:
wherein the second regulating and controlling module 26 specifically comprises:
   a first controlling sub module 32, configured to control the interrupt controller to route, in the manner of round robin, the interrupt device to other cores in the scheduling
   core group in the case that the number of interrupts of the interrupt device exceeds an interrupt threshold and a processing amount of the default processing core exceeds an interrupt load, or a processing amount of the default processing core exceeds an interrupt load;
   a second controlling sub module 34, configured to control the interrupt controller to route, in the manner of round robin, the interrupt device to part of the scheduling core group including the default processing core or to all of the scheduling core group, in the case that the number of interrupts of the interrupt device exceeds an interrupt threshold, but a processing amount of the default processing core does not exceed an interrupt load.

In addition, the above device may further comprise:
a first judging module 36 connected to the controlling module 26, configured to judge whether the number of interrupts allocated by the interrupt device to each core to which the interrupt device is routed exceeds the interrupt threshold;
a second judging module 38 connected to the controlling module 26, configured to, for each core to which the interrupt device is routed, judge whether the processing amount thereof exceeds an interrupt load thereof;
a processing module 30 connected to the first judging module 36 and the second judging module 38, configured to process interrupts of the interrupt device in a polling manner according to the judgment results of the first judging module and/or the second judging module, viz. in the case that the judgment result of the first judging module 36 or the second judging module 38 is yes, processing interrupts of the interrupt device in a polling manner.

Through the above preferable embodiments, different scheduling strategies are provided for the multiple cores of a multicore processor in multiple cases, which solves the problem, i.e., for interrupt processing of a multicore processor, if load balance of the system is not considered or if load balance of the system is not considered in accordance with practical application, interrupt processing can not be realized properly, and enables balancing
processing of interrupts.

### Method Embodiment

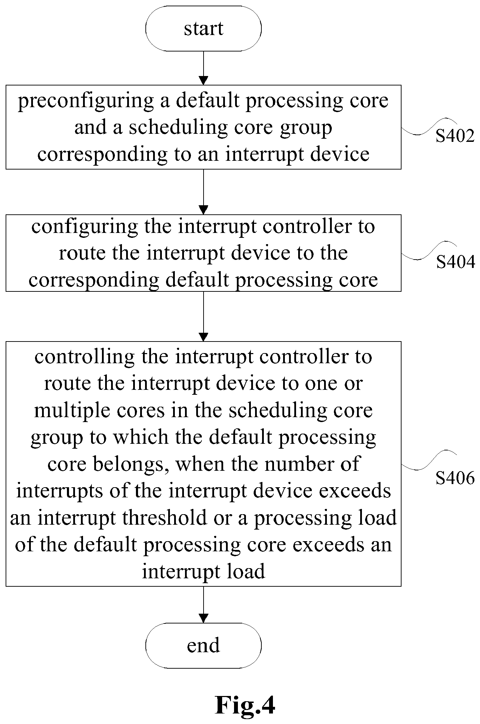

According to an embodiment of the present invention, a method for balancing an interrupt load of a multicore processor is provided, wherein the multicore processor comprises multiple cores and an interrupt controller for controlling interrupt handling of the cores. The present method embodiment can be carried out in conjunction with the device described above. Figure 4 is a flow chart of the method for balancing an interrupt load of a multicore processor according to an embodiment of the present invention. As shown in Figure 4, the method comprises the following Step S402 to Step S406:
Step S402, pre-configuring a default processing core and a scheduling core group corresponding to an interrupt device, wherein the default processing core is one core in the scheduling core group;
Step S404, configuring the interrupt controller to route the interrupt device to the corresponding default processing core;
Step S406, controlling the interrupt controller to route the interrupt device to one or multiple cores in the scheduling core group to which the default processing core belongs, when the number of interrupts of the interrupt device exceeds an interrupt threshold or a processing amount of the default processing core exceeds an interrupt load (wherein the interrupt load can be determined depending on the factors such as the upper limit of core occupancy, the maximum frequency of interrupts, and the number of interrupt sources on the core and so on); wherein if the scheduling core group only includes one core, interrupts of the interrupt device can be processed in a polling manner; in addition, it is feasible to pre-configure a preset time, and when the preset time is up, the interrupt controller is controlled to route the interrupt device back to the default processing core for processing.

Through the present embodiment, different scheduling strategies are used on multiple cores of a multicore processor, which enables balancing processing of interrupts, enhances the real-time performance, stability, and reliability of the system.

In Step S406, the interrupt controller can be controlled, according to the following cases, to route the interrupt device to one or multiple cores in the scheduling core group to which the default processing core belongs (the process can be realized by the above controlling modules):
(1) in the case that the number of interrupts of the interrupt device exceeds an interrupt threshold and the processing amount of the default processing core exceeds an interrupt load, the interrupt controller is controlled to route, in the manner of round robin, the interrupt device to other cores in the scheduling core group, wherein other cores herein do not include the default processing core;
(2) in the case that the number of interrupts of the interrupt device exceeds an interrupt threshold but the processing amount of the default processing core does not exceed an interrupt load, the interrupt controller is controlled to route, in the manner of round robin, the interrupt device to other cores in the scheduling core group, wherein the other cores herein include the default processing core, and can be part of or all of the cores in the scheduling core group;
(3) in that case that the processing amount of the default processing core exceeds an interrupt load, the interrupt controller is controlled to route the interrupt device to other cores in the scheduling core group, wherein different from the above case (1) and case (2), the conditions of the interrupt device per se are not taken into consideration, and only the conditions of the default processing core are taken into consideration.

In Step S406, after routing the interrupt device to achieve the balance of interrupt load, according to the variation of practical situation, it is further required to specifically regulate or adjust the process of interrupt processing, which can be carried out as follows: judging whether the number of interrupts, which are allocated by the interrupt device to each core to which the interrupt device is routed, exceeds the interrupt threshold; or for each core to which the interrupt device is routed, judging whether the processing amount thereof exceeds an interrupt load thereof; wherein if either of the judgment results is "yes", the interrupts of the interrupt device are processed in a polling manner.

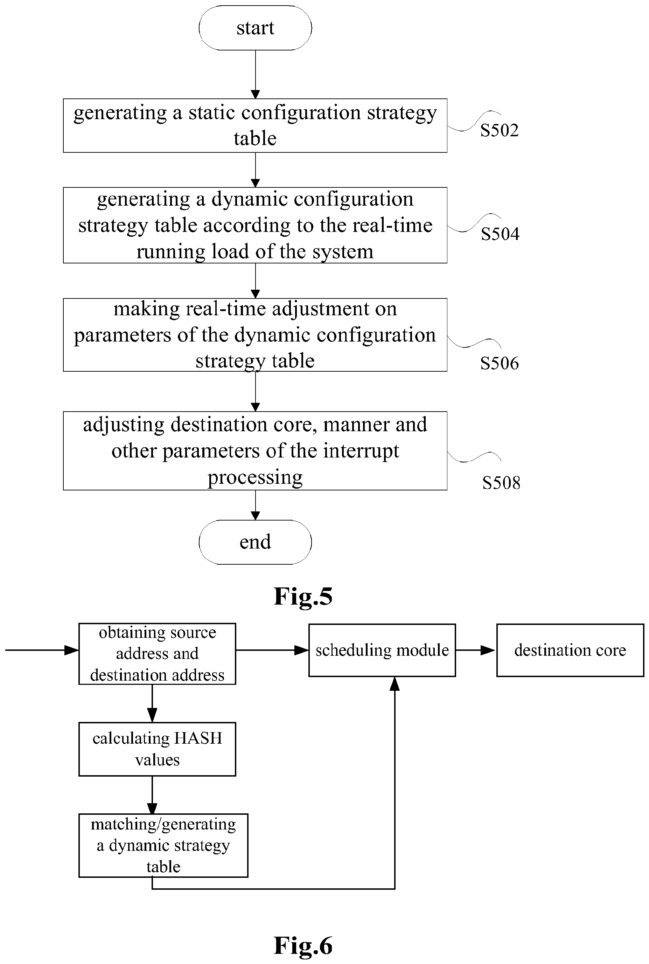

The specific implementation of the present invention will be described herein in detail in conjunction with examples. Figure 5 is a flow chart of software processing of the method for balancing an interrupt load of a multicore processor according to an embodiment of the present invention. As shown in Figure 5, after the system is powered on and starts running, the following Step S502 to Step S508 are included:
Step S502, initially allocating interrupt sources of the system, generating a static interrupt strategy table, and storing the static interrupt strategy table in a nonvolatile memory, wherein the table is read from the nonvolatile memory to perform initial allocation of the interrupts, as every time the system is powered on and starts running, which corresponds to the above Step S402 and Step S404;
Step S504, generating a dynamic interrupt strategy table according to the performance of real-time running of the system, and real-time adjusting the load of each core in the system;
Step S506, real-time adjusting the parameters of the dynamic interrupt strategy table;
Step S508, re-allocating processing of the interrupt in each core according to the adjusted dynamic interrupt strategy table, viz. adjusting destination core, manner and other parameters of the interrupt processing, to avoid thrashing of the interrupt between cores, so as to achieve the object of load balance of the system. Step S504 to Step S508 correspond to the above Step S406 and the subsequent preferable operations of Step S406.

The specific implementation of the present invention will be described herein in detail. The above Step S402 can be realized through the following procedures: presetting a static interrupt strategy table, setting the corresponding relation among type of the interrupt device, the scheduling core group, and the default processing core in the static interrupt strategy table. Table 1 shows an example of the static interrupt strategy table. Preferably, the static interrupt strategy table can be stored in a nonvolatile memory. As there are many interfaces for exterior devices in a multicore processor, when the static interrupt strategy table is initially generated, it is required to firstly divide according to the number of interrupt sources, the type of the interrupt device, etc. so as to achieve the object of roughly balancing interrupts among the multiple cores.

As shown in Table 1, besides the type of the interrupt source, the interrupt scheduling core group, and the default processing core, the static strategy configuration of an interrupt further comprises an interrupt threshold value and an interrupt mode (including interrupt and polling). Specifically, according to the type of the exterior device, the interrupt scheduling core group and the default processing core corresponding to different interrupt sources are configured; according to the default processing core, the interrupt static strategy table is read when the system is powered on and starts running; according to the interrupt static strategy table, the destination cores (viz. respective default processing cores) to which the interrupts are transmitted are divided among the cores, and the interrupt controller is configured according to the divided destination cores, to initially achieve the object of balancing interrupt load in the multiple cores (viz. the above Step S502). That is, the interrupt controller of the multicore processor is configured, and various interrupt devices are correctly routed to their respective default processing cores (viz. the above Step S404). For example, all the interrupts at serial ports are reported to the core 0, the interrupts at the network ports to the core 1, and the interrupts of the PCI device to the core 2. When the interrupt load of the interrupt device exceeds an interrupt threshold, it is allowed that the load balancing is performed in the interrupt scheduling core group set in the static interrupt strategy table. For example, when the interrupt scheduling core group is the same as the default processing core, viz. the interrupt scheduling core group only includes one core, such as the configuration shown in Line 1 in Table 1, the interrupt can only bonded to be processed in the default processing core.

**Table 1 Interrupt Static Strategy Configuration**

| type of interrupt source | interrupt scheduling core group | default processing core | interrupt threshold (times/second) | interrupt mode |
|---|---|---|---|---|
| serial port | 0 | 0 | 100 | interrupt/polling |
| network port | 0, 1, 2 | 1 | 1000 | interrupt |
| ... | ... | ... | ... | ... |
| PCI device | 1,2,3 | 2 | 200 | interrupt/polling |

When the system is running, the sudden flux of the exterior device is not balanced, and the interrupt load initially and roughly allocated may result in that some cores have heavy load while some other cores are idle in practical running. Thus, it is possible to monitor in real time whether the number of interrupts of each interrupt device exceeds an interrupt threshold and whether the processing amount of each core exceeds an interrupt load, and then, control the interrupt controller to route the interrupt device to one or multiple cores in the scheduling core group to which the default processing core belongs (viz. Step S406). This process can be carried out in the following way: on the basis of the static configuration strategy table, a dynamic configuration strategy table is dynamically generated in real time (viz. the above Step S504), and preferably, the dynamic configuration strategy table may be stored in a shared memory. Table 2 and Table 3 are two dynamic strategy tables, wherein Table 2 is interrupt dynamic strategy configuration of the network port, and Table 3 is interrupt dynamic strategy configuration of the PCI device. The embodiments according to the present invention include, but are not limited to, the elements listed in the tables. Preferably, the storage positions of the items are set using Hash algorithm in the dynamic configuration strategy tables, which can avoid conflict in storage positions of the items in the dynamic configuration strategy tables. It shall be explained that, when the system has not generated a dynamic configuration table, load balancing is performed by using a static configuration table, otherwise, load balancing is performed by using a dynamic configuration table.

**Table 2 Interrupt Dynamic Strategy Configuration of Network Port**

| Hash value of network port | source address and destination address | existence service time (second) | scheduling core group | core affinity | interrupt mode | aging time (second) |
|---|---|---|---|---|---|---|
| 0 | <10.2.2.2,10.4.51.3> | 1000 | 0, 1, 2 | 1 | interrupt | 10 |
| 1 | <192.1.168.2,192.1.162.3> | 300 | 0, 1, 2 | 1 | interrupt | 10 |
| ... | ... | ... | ... | ... | ... | ... |
| K | <192.1.168.7,192.1.162.6> | -1 | 0, 1, 2 | 1 | interrupt | 10 |

When the exterior device is a network port, it is possible to generate in real time an interrupt dynamic strategy configuration table of the network port as shown in Table 2 according to the characteristics of the network message stream. In Table 2, the interrupt dynamic strategy configuration of the network port includes: Hash value of the network port, existence service time, the scheduling core group, core affinity, interrupt mode, aging time, and source address and destination address, wherein in order to avoid directed thrashing of interrupt service of the device between cores, the setting of the existence service time (viz. the above preset time) needs to take various factors into consideration, for example, service time length on different cores, frequency of interrupt occurring, history of interrupt load of each core, interrupt priority, etc., which is generated according to weighted values. When the existence service time is up, the interrupt controller is controlled to route the interrupt device back to the core (corresponding to the above default processing core) in core affinity for processing; and when the aging time is up, a preset master core (which indicates one core in a multicore processor) deletes items which are not updated when the aging time expires.

The network port interrupt dynamic strategy configuration in Table 2 is herein described in detail in conjunction with Figure 6. Figure 6 is a schematic diagram of network port interrupt load balancing according to an embodiment of the present invention. As shown in Figure 6, considering that different streams shall be directed to other cores for processing and at the same time it is required to concentrate the message streams of high relevancy in a same core for processing, it can be realized in accordance with the source address and destination address of the messages, for example, obtaining the source address and destination address of a message, and then calculating a HASH value, performing the operation of matching in the dynamic strategy table according to the calculated HASH value, wherein the matching herein includes effectiveness detection of aging time, HASH value matching and so on. If the returned result for the search is null, viz. no corresponding record is found, an item corresponding to the message stream can be added to the dynamic strategy table, and if the returned result for the search is not null, viz. the corresponding record is found, the schedulable core group of the message stream can be obtained through a scheduling module. Through a scheduling module, a group of relevant message streams with the HASH values close to each other are re-directed to the same core for processing, viz. for relevant interrupts in the interrupt device, the interrupt controller is controlled to route the relevant interrupts in the interrupt device to a same core in the scheduling core group for processing, and in this way, the processing performance of the system can be enhanced.

**Table 3 Interrupt Dynamic Strategy Configuration of PCI device**

| | physical port number | interrupt threshold (times/second) | existence service time (s) | scheduling core group | core affinity | interrupt mode | aging time (second) |
|---|---|---|---|---|---|---|---|
| PCI device 0 | 0 | 100 | -1 | 1,2,3 | 1 | interrupt | 10 |
| PCI device 1 | 1 | 100 | -1 | 1, 2 | 2 | interrupt | 10 |
| ... | ... | | ... | ... | ... | ... | 10 |
| PCI device M | M | 1000 | 300 | 3 | 3 | interrupt/polling | 10 |

When the exterior device is a PCI device, an interrupt dynamic strategy configuration table of the PCI device as shown in Table 3 is generated in real time.

The above dynamic configuration strategy table can be updated in real time according to practical application, for example, each core can read, write, and modify the dynamic configuration strategy table, the process of which needs to ensure exclusive operation on the dynamic configuration strategy table (viz. the above Step S506). Specifically, each item in the above dynamic strategy configuration table is maintained and updated by the core which currently processes the item, and is periodically updated at an interval shorter than the aging time in the item. The master core periodically reduces the aging time of each item. When the aging time is reduced to 0, the item is deleted from the dynamic strategy configuration table. After HASH values of different message streams are calculated, they may be at the same position in the dynamic strategy configuration table, and at this time, it is possible to consider adding a secondary sub table with the same HASH value, so as to avoid any conflict.

Then, according to the adjusted dynamic interrupt strategy table, the processing of interrupts in each core is re-allocated, to achieve the object of load balancing of the system (viz. the above Step S508).

The operation of controlling the interrupt controller to route the interrupt device to one or multiple cores in the scheduling core group to which the default processing core belongs in the above Step S406 can be carried out in the following way.

According to the above dynamic configuration strategy table, when the number of interrupts of the interrupt device exceeds an interrupt threshold, the interrupt controller transmits, through an processor interrupt, a message to a destination core in the scheduling core group to which the default processing core belongs, or sequentially transmits, using a round-robin algorithm, a message to a group of destination cores in the scheduling core group to which the default processing core belongs, to perform interrupt load balancing, the message transmitted carrying an entry address of the service program processing the current interrupt, processing manner of interrupt or polling, etc. Then, the destination core or the group of destination cores receive the above message, and according to the message, turn the thread into the service program which processes the current interrupt, so as to perform interrupt processing.

When the interrupt device has low efficiency due to interrupt processing (viz. the number of interrupts allocated by the interrupt device to each core to which the interrupt device is routed exceeds an interrupt threshold, or the processing amount of each core to which the interrupt device is routed exceeds an interrupt load thereof), the processing manner of polling may be considered to be used for processing, for example, when the default processing core has a heavy load, controlling the interrupt controller to transmit an inter processor interrupt message to a designated core (which may be one core in the scheduling core group), wherein a service program for processing the interrupt is carried in the inter processor interrupt message, and existence service time is set in the inter processor interrupt message, and wherein if the interrupt mode can be the polling mode, the current interrupt device is shielded and the processing is performed by the designated core in the polling mode, and at the same time, it is required to update the items in the dynamic configuration strategy table, viz. changing the interrupt mode from interrupt to polling. After the existence service time is up, it is judged whether the processing amount of the default processing core is decreased below an interrupt load, wherein if the judgment result is yes, the interrupt mode is changed from polling to interrupt, and the interrupt controller is controlled to transmit a message to re-route back to the default processing core to process the interrupts of the interrupt device, and at the same time, the shielded interrupt device is opened.

Through the embodiments of the present invention, in a multicore processing environment, the advantages of Level 1, 2 Caches of core are sufficiently promoted by processing interactive data messages separately on different cores, a strategy table which is dynamically generated in real time is used to concentrate data streams of high relevancy in the same core for processing, which makes full use of the characteristics of the caches, and at the same time, different interrupt balancing strategies are used according to practical application, and inter processor interrupts are used to balance interrupt load balance of a multicore processor on the multiple cores, which avoids extra burden brought forth by a single interrupt scheduling algorithm to the applications, enhances the overall performance of the system, and is helpful to the improvement of the overall performance of the system. Obviously, those skilled in the art shall appreciate, all of the above modules or steps of the present invention can be realized by a universal computing device, they can be concentrated in a single computing device, or distributed in the network consisting of several computing devices, preferably, they can be realized by program codes executable by the computing device, such that they can be stored in a storage device to be executed by the computing device, or each of them can be manufactured into an integrated circuit module, or several modules or steps of them can be manufactured into a single integrated circuit module. In this way, the present invention is not limited to the combination of any particular hardware and software.

The descriptions above are only preferable embodiments of the present invention, which are not used to restrict the present invention. For those skilled in the art, the present invention may have various changes and variations.

## Claims

1. A method for balancing an interrupt load of a multicore processor (102), the multicore processor (102) comprising multiple cores (104) and an interrupt controller (106) for controlling interrupt handling of the cores (104), **characterized in that** the method comprises:
pre-configuring (22) a default processing core and a scheduling core group corresponding to an interrupt device, wherein the default processing core is one core in the scheduling core group;
configuring (24) the interrupt controller (106) to route the interrupts of the interrupt device to the corresponding default processing core; and
controlling (26) the interrupt controller (106) to route the interrupts of the interrupt device to one or multiple cores in the scheduling core group to which the default processing core belongs, when the number of the interrupts of the interrupt device exceeds an interrupt threshold or a processing amount of the default processing core exceeds an interrupt load;
wherein the step of controlling (26) the interrupt controller (106) to route the interrupts of the interrupt device to one or multiple cores in the scheduling core group to which the default processing core belongs specifically comprises:
- controlling (32) the interrupt controller (106) to route, in the manner of round robin, the interrupts of the interrupt device to other cores in the scheduling core group, in the case that the number of interrupts of the interrupt device exceeds the interrupt threshold and the processing amount of the default processing core exceeds the interrupt load; and
- controlling (34) the interrupt controller (106) to route, in the manner of round robin, the interrupts of the interrupt device to part of or all of the cores in the scheduling core group including the default processing core,
in the case that the number of interrupts of the interrupt device exceeds the interrupt threshold, but the processing amount of the default processing core does not exceed the interrupt load, wherein both said part of and all of the cores include the default processing core;
wherein the other cores do not include the default processing core.

2. The method according to Claim 1, **characterized in that**
in the case that the processing amount of the default processing core exceeds the interrupt load, the interrupt controller (106) is controlled to route the interrupts of the interrupt device to other cores in the scheduling core group.

3. The method according to any one of Claims 1-2, **characterized in that** pre-configuring (22) a default processing core and a scheduling core group corresponding to an interrupt device specifically comprises:
setting the corresponding relation among type of the interrupt device, the scheduling core group, and the default processing core in a static interrupt strategy table, and storing the static interrupt strategy table in a nonvolatile memory, wherein the static interrupt strategy table is further set with the interrupt threshold and an interrupt mode, the interrupt mode including interrupt and polling.

4. A device for balancing an interrupt load of a multicore processor (102), the multicore processor (102) comprising multiple cores (104) and an interrupt controller (106) for controlling interrupt handling of the cores (104), **characterized in that** the device comprises:
a configuration module (22), configured to pre-configure a default processing core and a scheduling core group corresponding to an interrupt device, wherein the default processing core is one core in the scheduling core group;
a first regulating and controlling module (24), configured to control the interrupt controller (106) to route the interrupts of the interrupt device to the corresponding default processing core; and
a second regulating and controlling module (26), configured to control the interrupt controller (106) to route the interrupts of the interrupt device to one or multiple cores in the scheduling core group to which the default processing core belongs, when the number of interrupts of the interrupt device exceeds an interrupt threshold or a processing amount of the default processing core exceeds an interrupt load;
wherein the second regulating and controlling module (26) specifically comprises:
a first regulating and controlling sub module (24), configured to control the interrupt controller (106) to route in the scheduling core group, in the manner of round robin, the interrupts of the interrupt device to other cores in the case that the number of interrupts of the interrupt device exceeds the interrupt threshold and the processing amount of the default processing core exceeds the interrupt load; and
a second regulating and controlling sub module (26), configured to control the interrupt controller (106) to route, in the manner of round robin, the interrupts of the interrupt device to part of or all of the cores in the scheduling core group including the default processing core in the case that the number of interrupts of the interrupt device exceeds the interrupt threshold, but the processing amount of the default processing core does not exceed the interrupt load, wherein both said part of and all of the cores include the default processing core;
wherein the other cores do not include the default processing core.

## Patentansprüche

1. Verfahren zum Ausgleichen einer Interruptlast eines Multicore-Prozessors (102), wobei der Multicore-Prozessor (102) mehrere Kerne (104) und einen Interrupt-Controller (106) zur Steuerung der Interrupt-Handhabung der Kerne (104) umfasst, **dadurch gekennzeichnet, dass** das Verfahren umfasst:
Vorkonfigurieren (22) eines standardmäßigen Verarbeitungskerns und einer Planungs-Kerngruppe, die einer Interrupt-Vorrichtung entsprechen, wobei der standardmäßige Verarbeitungskern ein Kern in der Planungs-Kerngruppe ist;
Konfigurieren (24) des Interrupt-Controllers (106), um die Interrupts der Interrupt-Vorrichtung an den entsprechenden standardmäßigen Verarbeitungskern zu leiten; und
Steuern (26) des Interrupt-Controllers (106), um die Interrupts der Interrupt-Vorrichtung an einen oder mehrere Kerne in der Planungs-Kerngruppe, zu der der standardmäßige Verarbeitungskern gehört, zu leiten, wenn die Anzahl der Interrupts der Interrupt-Vorrichtung einen Interrupt-Schwellenwert überschreitet oder eine Verarbeitungsmenge des standardmäßigen Verarbeitungskerns eine Interruptlast überschreitet;
wobei der Schritt des Steuerns (26) des Interrupt-Controllers (106), um die Interrupts der Interrupt-Vorrichtung zu einem oder mehreren Kernen in der Planungs-Kerngruppe, zu der der standardmäßige Verarbeitungskern gehört, zu leiten, insbesondere umfasst:
- Steuern (32) des Interrupt-Controllers (106), um die Interrupts der Interrupt-Vorrichtung in der Art eines Round-Robin zu anderen Kernen in der Planungs-Kerngruppe zu leiten, in dem Fall, dass die Anzahl der Interrupts der Interrupt-Vorrichtung den Interrupt-Schwellenwert überschreitet und die Verarbeitungsmenge des standardmäßigen Verarbeitungskerns die Interrupt-Last überschreitet; und
- Steuern (34) des Interrupt-Controllers (106), um die Interrupts der Interrupt-Vorrichtung in der Art eines Round-Robin zu einem Teil der oder allen Kernen in der Planungs-Kerngruppe, die den standardmäßigen Verarbeitungskern umfasst, zu leiten,
in dem Fall, dass die Anzahl der Interrupts der Interrupt-Vorrichtung den Interrupt-Schwellenwert überschreitet, die Verarbeitungsmenge des standardmäßigen Verarbeitungskerns jedoch nicht die Interruptlast überschreitet, wobei sowohl der Teil der als auch alle Kerne den standardmäßigen Verarbeitungskern umfassen;
wobei die anderen Kerne den standardmäßigen Verarbeitungskern nicht umfassen.

2. Verfahren nach Anspruch 1, **dadurch gekennzeichnet, dass**
in dem Fall, dass die Verarbeitungsmenge des standardmäßigen Verarbeitungskerns die Interruptlast überschreitet, der Interrupt-Controller (106) gesteuert ist, um die Interrupts der Interrupt-Vorrichtung zu anderen Kernen der Planungs-Kerngruppe zu leiten.

3. Verfahren nach einem der Ansprüche 1-2, **dadurch gekennzeichnet, dass** das Vorkonfigurieren (22) eines standardmäßigen Verarbeitungskerns und einer Planungs-Kerngruppe, die einer Interrupt-Vorrichtung entsprechen, insbesondere umfasst:
Einstellen der entsprechenden Beziehung zwischen dem Typ der Interrupt-Vorrichtung, der Planungs-Kerngruppe und dem standardmäßigen Verarbeitungskern in einer statischen Interruptstrategietabelle und Speichern der statischen Interruptstrategietabelle in einem nichtflüchtigen Speicher, wobei die statische Interruptstrategietabelle ferner mit dem Interrupt-Schwellenwert und einem Interruptmodus eingestellt ist, wobei der Interruptmodus Interrupt und Abfrage umfasst.

4. Vorrichtung zum Ausgleichen einer Interruptlast eines Multicore-Prozessors (102), wobei der Multicore-Prozessor (102) mehrere Kerne (104) und einen Interrupt-Controller (106) zur Steuerung der Interrupt-Handhabung der Kerne (104) umfasst, **dadurch gekennzeichnet, dass** die Vorrichtung umfasst:
ein Konfigurationsmodul (22), das konfiguriert ist, um einen standardmäßigen Verarbeitungskern und eine Planungs-Kerngruppe, die einer Interrupt-Vorrichtung entsprechen, vorzukonfigurieren, wobei der standardmäßige Verarbeitungskern ein Kern in der Planungs-Kerngruppe ist;
ein erstes Regel- und Steuermodul (24), das konfiguriert ist, um den Interrupt-Controller (106) zu steuern, um die Interrupts der Interrupt-Vorrichtung an den entsprechenden standardmäßigen Verarbeitungskern zu leiten; und
ein zweites Regel- und Steuermodul (26), das konfiguriert ist, um den Interrupt-Controller (106) zu steuern, um die Interrupts der Interrupt-Vorrichtung an einen oder mehrere Kerne in der Planungs-Kerngruppe, zu der der standardmäßige Verarbeitungskern gehört, zu leiten, wenn die Anzahl der Interrupts der Interrupt-Vorrichtung einen Interrupt-Schwellenwert überschreitet oder eine Verarbeitungsmenge des standardmäßigen Verarbeitungskerns eine Interruptlast überschreitet;
wobei das zweite Regel- und Steuermodul (26) insbesondere umfasst:
ein erstes Regel- und Steuer-Untermodul (24), das konfiguriert ist, um den Interrupt-Controller (106) zu steuern, um in der Planungs-Kerngruppe die Interrupts der Interrupt-Vorrichtung in der Art eines Round-Robin zu anderen Kernen zu leiten, in dem Fall, dass die Anzahl der Interrupts der Interrupt-Vorrichtung den Interrupt-Schwellenwert überschreitet und die Verarbeitungsmenge des standardmäßigen Verarbeitungskerns die Interruptlast überschreitet; und
ein zweites Regel- und Steuer-Untermodul (26), das Konfiguriert ist, um den Interrupt-Controller (106) zu steuern, um die Interrupts der Interrupt-Vorrichtung in der Art eines Round-Robin zu einem Teil der oder allen Kernen in der Planungs-Kerngruppe, die den standardmäßigen Verarbeitungskern umfasst, zu leiten, in dem Fall, dass die Anzahl von Interrupts der Interrupt-Vorrichtung den Interrupt-Schwellenwert überschreitet, die Verarbeitungsmenge des standardmäßigen Verarbeitungskerns jedoch nicht die Interruptlast überschreitet, wobei sowohl der Teil der als auch alle der Kerne den standardmäßigen Verarbeitungskern umfassen;
wobei die anderen Kerne den standardmäßigen Verarbeitungskern nicht umfassen.

## Revendications

1. Procédé d'équilibrage d'une charge d'interruption d'un processeur multicoeur (102), le processeur multicoeur (102) comprenant plusieurs coeurs (104) et un contrôleur d'interruption (106) pour commander la gestion d'interruption des coeurs (104), **caractérisé en ce que** le procédé comprend :
la pré-configuration (22) d'un coeur de traitement par défaut et d'un groupe de coeurs de planification correspondant à un dispositif d'interruption, le coeur de traitement par défaut étant un coeur du groupe de coeurs de planification;
la configuration (24) du contrôleur d'interruption (106) pour acheminer les interruptions du dispositif d'interruption vers le coeur de traitement par défaut correspondant ; et
la commande (26) du contrôleur d'interruption (106) pour acheminer les interruptions du dispositif d'interruption vers un ou plusieurs coeurs du groupe de coeurs de planification auquel appartient le coeur de traitement par défaut, lorsque le nombre d'interruptions du dispositif d'interruption dépasse un seuil d'interruption ou une quantité de traitement du coeur de traitement par défaut dépasse une charge d'interruption ;
l'étape de commande (26) du contrôleur d'interruption (106) pour acheminer les interruptions du dispositif d'interruption vers un ou plusieurs coeurs du groupe de coeurs de planification auquel appartient le coeur de traitement par défaut comprenant spécifiquement :
- la commande (32) du contrôleur d'interruption (106) pour acheminer, à la manière de round robin, les interruptions du dispositif d'interruption vers d'autres coeurs du groupe de coeurs de planification, dans le cas où le nombre d'interruptions du dispositif d'interruption dépasse le seuil d'interruption et la quantité de traitement du coeur de traitement par défaut dépasse la charge d'interruption ; et
- la commande (34) du contrôleur d'interruption (106) pour acheminer, à la manière de round robin, les interruptions du dispositif d'interruption vers une partie ou tous les coeurs du groupe de coeurs de planification, y compris le coeur de traitement par défaut,
dans le cas où le nombre d'interruptions du dispositif d'interruption dépasse le seuil d'interruption mais la quantité de traitement du coeur de traitement par défaut ne dépasse pas la charge d'interruption, dans lequel ladite partie de et tous les coeurs comprennent le coeur de traitement par défaut ;
les autres coeurs ne comprenant pas le coeur de traitement par défaut.

2. Procédé selon la revendication 1, **caractérisé en ce que**
dans le cas où la quantité de traitement du coeur de traitement par défaut dépasse la charge d'interruption, le contrôleur d'interruption (106) est commandé pour acheminer les interruptions du dispositif d'interruption vers d'autres coeurs du groupe de coeurs de planification.

3. Procédé selon l'une quelconque des revendications 1 à 2, **caractérisé en ce que** la pré-configuration (22) d'un coeur de traitement par défaut et d'un groupe de coeurs de planification correspondant à un dispositif d'interruption comprend spécifiquement :
Le réglage de la relation correspondante entre le type du dispositif d'interruption, le groupe de coeurs de planification et le coeur de traitement par défaut dans une table de stratégie d'interruption statique et le stockage de la table de stratégie d'interruption statique dans une mémoire non volatile, dans lequel la table de stratégie d'interruption statique est en outre définie avec le seuil d'interruption et un mode d'interruption, le mode d'interruption incluant l'interruption et l'interrogation.

4. Dispositif d'équilibrage d'une charge d'interruption d'un processeur multicoeurs (102), le processeur multicoeurs (102) comprenant plusieurs coeurs (104) et un contrôleur d'interruption (106) pour commander la gestion d'interruption des coeurs (104), **caractérisé en ce que** le dispositif comprend :
un module de configuration (22) configuré pour pré-configurer un coeur de traitement par défaut et un groupe de coeurs de planification correspondant à un dispositif d'interruption, le coeur de traitement par défaut étant un coeur du groupe de coeurs de planification ;
un premier module de régulation et de commande (24) configuré pour commander le contrôleur d'interruption (106) pour acheminer les interruptions du dispositif d'interruption vers le coeur de traitement par défaut correspondant ; et
un second module de régulation et de commande (26) configuré pour commander le contrôleur d'interruption (106) pour acheminer les interruptions du dispositif d'interruption vers un ou
plusieurs coeurs du groupe de coeurs de planification auquel appartient le coeur de traitement par défaut, lorsque le nombre d'interruptions du dispositif d'interruption dépasse un seuil d'interruption ou une quantité de traitement du coeur de traitement par défaut dépasse une charge d'interruption ;
le second module de régulation et de commande (26) comprenant spécifiquement :
un premier sous-module de régulation et de commande (24), configuré pour commander le contrôleur d'interruption (106) pour acheminer dans le groupe de coeurs de planification, à la manière de round robin, les interruptions du dispositif d'interruption vers une partie ou tous les coeurs, dans le cas où le nombre d'interruptions du dispositif d'interruption dépasse le seuil d'interruption et la quantité de traitement du coeur de traitement par défaut dépasse la charge d'interruption ; et
un second sous-module de régulation et de commande (26), configuré pour commander le contrôleur d'interruption (106) pour acheminer, à la manière de round robin, les interruptions du dispositif d'interruption vers une partie ou tous les coeurs du groupe de coeurs de planification comprenant le coeur de traitement par défaut, dans le cas où le nombre d'interruptions du dispositif d'interruption dépasse le seuil d'interruption mais la quantité de traitement du coeur de traitement par défaut ne dépasse pas la charge d'interruption, dans lequel ladite partie de et tous les coeurs comprennent le coeur de traitement par défaut ;
les autres coeurs ne comprenant pas le coeur de traitement par défaut.
